(19) Europäisches Patentamt
European Patent Office
Office européen des brevets

(11) **EP 3 135 903 B1**

(12) **EUROPÄISCHE PATENTSCHRIFT**

(45) Veröffentlichungstag und Bekanntmachung des Hinweises auf die Patenterteilung:
**30.06.2021  Patentblatt 2021/26**

(51) Int Cl.:
***F03D 7/02*** *(2006.01)*

(21) Anmeldenummer: **16178515.9**

(22) Anmeldetag: **23.03.2012**

(54) **WINDENERGIEANLAGE UND VERFAHREN ZUM BETREIBEN EINER WINDENERGIEANLAGE**

WIND ENERGY SYSTEM AND METHOD FOR OPERATING A WIND ENERGY SYSTEM

ÉOLIENNE, PROCÉDÉ DE FONCTIONNEMENT D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2011   DE 102011006670**

(43) Veröffentlichungstag der Anmeldung:
**01.03.2017   Patentblatt 2017/09**

(62) Dokumentnummer(n) der früheren Anmeldung(en) nach Art. 76 EPÜ:
**12711622.6 / 2 694 808**

(73) Patentinhaber: **Wobben Properties GmbH**
**26607 Aurich (DE)**

(72) Erfinder:
• **Beekmann, Alfred**
**26639 Wiesmoor (DE)**
• **de Boer, Wolfgang**
**26802 Moormerland (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 2 492 499      WO-A1-2005/025026**
**US-A1- 2003 185 665**

• **ZERTEK A ET AL: "Participation of DFIG wind turbines in frequency control ancillary service by optimized rotational kinetic energy", ENERGY MARKET (EEM), 2010 7TH INTERNATIONAL CONFERENCE ON THE EUROPEAN, IEEE, PISCATAWAY, NJ, USA, 23 June 2010 (2010-06-23), pages 1-6, XP031739997, ISBN: 978-1-4244-6838-6**

**Beschreibung**

Die vorliegende Erfindung betrifft ein Verfahren zum Steuern einer Windenergieanlage sowie eine entsprechende Windenergieanlage.

Windenergieanlagen sind allgemein bekannt und dienen dazu, kinetische Energie aus dem Wind zu entnehmen und in elektrische Energie umzuwandeln, um diese in ein elektrisches Netzwerk einzuspeisen. Dabei kommt Windenergieanlagen heutzutage auch die Aufgabe zu, das elektrische Netz, in das sie einspeisen, zu stützen.

So wird beispielsweise in der deutschen Patentanmeldung DE 100 22 974 A1 aus dem Jahre 2000 (Offenlegungstag 22.11.2001) eine frequenzabhängige Leistungsregelung beschrieben. Demnach wird vorgeschlagen, dass mit steigender Netzfrequenz die Leistung, die die Windenergieanlage in das Netz einspeist, reduziert wird, sobald die Netzfrequenz einen Grenzwert überschritten hat.

Hierdurch wird eine Netzsituation berücksichtigt, bei der ein Energieüberangebot besteht, was aufgrund des Verhaltens großer Kraftwerke zu einer Frequenzzunahme führt, die die Erfindung gemäß der genannten Offenlegungsschrift DE 100 22 974 A1 adressiert.

Im Falle eines Energieunterangebots bzw. eines erhöhten Energiebedarfs im Netz ergäbe sich ein Frequenzabfall, auf den idealerweise mit einer Erhöhung der eingespeisten Leistung reagiert werden könnte. Eine Erhöhung der einzuspeisenden Leistung ist durch eine Windenergieanlage aber schwierig zu erfüllen, weil die Windenergieanlage optimaler weise bereits die maximal aus dem Wind entnehmbare Leistung einspeist. Um dennoch zumindest eine kurzzeitige Leistungserhöhung zu ermöglichen, wird beispielsweise gemäß der deutschen Patentanmeldung DE 10 2009 014 012 A1 und dem wissenschaftlichen Artikel "Participation of DFIG wind turbines in frequency control ancillary service by optimized rotational kinetic energy" von Zertek, Verbic und Pantos, vorgeschlagen, eine kurzfristige Leistungserhöhung unter Ausnutzung der in dem Trägheitsmoment des Rotor-Generatorsystems gespeicherten Rotationsenergie durchzuführen. Ein solches Verfahren ist jedoch auf die in dem Rotor-Generatorsystem gespeicherte Rotationsenergie angewiesen.

Als weiterer Stand der Technik wird an dieser Stelle allgemein auf folgende Druckschriften hingewiesen: DE 103 41 504 A1, WO 2011/000531 A2 sowie WO 2005/025026 A1. Zusätzlich wird auf US 2003/0185665 A1 hingewiesen, die eine möglichst optimale Energieerzeugung bei hohen Windgeschwindigkeiten betrifft, wobei hierzu in Abhängigkeit der Windgeschwindigkeit der Blattwinkel verstellt wird.

Der vorliegenden Erfindung liegt somit die Aufgabe zugrunde, wenigstens eines der oben genannten Probleme zu beheben oder zu reduzieren. Insbesondere soll eine Lösung vorgeschlagen werden, die eine verbesserte Möglichkeit einer Netzstützung vorschlägt. Zumindest soll eine alternative Lösung vorgeschlagen werden.

Erfindungsgemäß wird ein Verfahren nach Anspruch 1 vorgeschlagen.

Demnach wird ein Verfahren zum Steuern einer an ein elektrisches Netz angeschlossenen Windenergieanlage vorgeschlagen, die einen Generator und einen aerodynamischen Rotor mit einstellbarer Drehzahl aufweist. Der aerodynamische Rotor ist zu unterscheiden von einem elektrodynamischen Rotor, der Teil des Generators ist. Der Generator und damit die Windenergieanlage insgesamt ist ein Typ, bei dem die Drehzahl einstellbar ist. Die Drehzahl ist also nicht fest an die Frequenz des elektrischen Netzes, das synonym auch als elektrisches Netzwerk bezeichnet werden kann, gekoppelt, sondern kann unabhängig von diesem eingestellt werden.

Eine solche Windenergieanlage kann und wird üblicherweise, bezogen auf die jeweils vorherrschenden Windbedingungen, in einem optimalen Betriebspunkt betrieben werden. Die vorherrschenden Windbedingungen beziehen sich insbesondere auf die vorherrschende Windgeschwindigkeit, was nachfolgend vereinfachend als einziges Merkmal der vorherrschenden Windbedingungen betrachtet wird. In der Realität wären weitere Bedingungen wie beispielsweise Böigkeit des Windes oder auch die Dichte der Luft zu berücksichtigen, was hier der Einfachheit halber ausgeklammert wird. Somit ist grundsätzlich jeder Windgeschwindigkeit ein optimaler Betriebspunkt zuordenbar. Dabei ist unter einem optimalen Betriebspunkt ein solcher zu verstehen, bei dem die Windenergieanlage möglichst viel Energie aus dem Wind entnimmt und ins elektrische Netz einspeist, wobei aber gleichzeitig Randbedingungen wie insbesondere Stabilität des Betriebspunktes und Anlagenbelastung wie insbesondere auch Verschleiß der Anlage berücksichtigt wird. Ein solcher optimaler Betriebspunkt ist insbesondere - was nachfolgend zur Beschreibung ausreicht - durch eine entsprechend optimale Drehzahl und optimale Leistungsabgabe gekennzeichnet. Die Leistungsabgabe betrifft hierbei diejenige Leistung, die in das elektrische Netz eingespeist wird. Diejenige Leistung, die der Generator hierbei abgibt, kann höher liegen, weil von dieser beispielsweise Verluste abzuziehen sind.

Obwohl ein solcher optimaler Betriebspunkt mit einer optimalen Drehzahl für im Grunde jede Windgeschwindigkeit für die jeweilige Anlage existiert, wird erfindungsgemäß vorgeschlagen, für einen Übergangszeitraum die Windenergieanlage in einem nicht optimalen Betriebspunkt zu betreiben, wobei die Drehzahl in diesem nicht optimalen Betriebspunkt, also die nicht optimale Drehzahl größer ist als die optimale Drehzahl des optimalen Betriebspunktes der vorherrschenden Windgeschwindigkeit.

Ein solcher Betrieb mit einer höheren Drehzahl wird insbesondere dann vorgeschlagen, wenn zu erwarten ist oder eine Wahrscheinlichkeit hoch ist, dass die Windenergieanlage zusätzliche Wirkleistung ins Netz einspeisen soll, nämlich zusätzliche Wirkleistung, die über die Wirkleistung hinausgeht, die aktuell aufgrund der vorherrschenden Windbedingungen, nämlich insbesondere Windgeschwindigkeit ins Netz eingespeist werden könnte. Für diesen Fall wird nämlich insbesondere für einen Übergangszeitraum die Windenergieanlage mit einer höheren Drehzahl betrieben, wodurch mehr kinetische Energie sowohl in dem aerodynamischen Rotor als auch einem elektrodynamischen Rotor des Generators gespeichert ist. Der Übergangszeitraum kann grundsätzlich von beispielsweise 10-30 Sekunden, 2-10 Minuten oder auch 1-5 Stunden oder 1-5 Tage dauern. Hier ist situationsabhängig jeweils zu entscheiden, wie weit der Betrieb in einem nicht optimalen Betriebspunkt für die entsprechende Länge des Übergangszeitraums gerechtfertigt ist. Grundsätzlich kann die Windenergieanlage auch dauerhaft in dem nicht optimalen Betriebspunkt mit einer erhöhten Drehzahl betrieben werden. Allerdings kann sich dies so nachteilig auf die Windenergieanlage auswirken, dass ein solcher dauerhafter Betrieb im nicht optimalen Betriebspunkt unverhältnismäßig wäre. Technisch wäre es jedoch möglich.

Grundsätzlich ist es möglich, die Windenergieanlage mit einer höheren Drehzahl als die optimale Drehzahl zu betreiben, ohne dass die in das Netz eingespeiste Leistung gegenüber dem optimalen Betriebspunkt reduziert wird. Dieser nicht optimale Betriebspunkt kann gleichwohl nachteilig sein, weil eine erhöhte Drehzahl beispielsweise einen erhöhten Verschleiß zur Folge hat. Weiterhin kann die erhöhte Drehzahl aerodynamisch derart ungünstig sein, dass der Betriebspunkt weniger stabil als der optimale Betriebspunkt ist. Möglicherweise kann dies einen erhöhten Regelungsaufwand und damit einen erhöhten Einsatz von Stellgliedern wie der Einstellung eines Drehmomentes oder Rotorwinkels erforderlich machen, was beispielsweise auch den Verschleiß erhöhen kann.

Vorzugsweise wird eine Windenergieanlage verwendet, die getriebelos ist. Eine solche getriebelose Windenergieanlage weist ein sehr großes Trägheitsmoment des Rotors des Generators auf, das zum Speichern kinetischer Energie vorteilhaft eingesetzt werden kann. Durch eine Erhöhung der Drehzahl ist somit mehr kinetische Energie speicherbar. Dabei ist zu beachten, dass die kinetische Energie, die in einem solchen drehenden Teil gespeichert ist, proportional zum Quadrat der Drehzahl ist. Das Trägheitsmoment, zu dem die gespeicherte Energie proportional ist, nimmt bei einem homogenen Vollzylinder mit dem Radius mit der vierten Potenz zu. Ein Vollzylinder mit zwei Metern Durchmesser hat also gegenüber einem Vollzylinder gleichen Materials und gleicher Länge mit einem Meter Durchmesser ein 16faches Trägheitsmoment. Dies verdeutlicht, dass eine getriebelose Windenergieanlage viel kinetische Energie speichern kann und diese gespeicherte kinetische Energie durch Erhöhung der Drehzahl nochmals überproportional erhöht werden kann.

Gemäß einer Ausführungsform wird vorgeschlagen, dass im Teillastbereich zum Einstellen eines jeweils optimalen Betriebspunktes eine erste Betriebskennlinie in der Windenergieanlage hinterlegt ist. Die Windenergieanlage kann anhand dieser Betriebskennlinie jeweils einen optimalen Betriebspunkt einstellen. Hierzu kann die Betriebskennlinie als Drehzahl-Leistungs-Kennlinie hinterlegt sein. Eine Umsetzung kann so erfolgen, dass die Drehzahl gemessen und dazu eine jeweilige Leistung gemäß der Betriebskennlinie eingestellt wird. Kann dem Wind beispielsweise mehr Leistung entnommen werden, erhöht sich die Drehzahl weiter und es wird ein entsprechend neuer Leistungswert gemäß der Betriebskennlinie eingestellt. Die Leistung kann mittels Einstellung des Drehmomentes des Generators eingestellt werden. Die Einstellung des Drehmomentes hängt ab vom Anlagentyp. Wird beispielsweise ein Synchrongenerator mit einem gleichstromerregten Rotor verwendet, wird das Drehmoment über den entsprechenden Gleichstrom zur Einstellung der Erregung eingestellt.

Eine solche optimale Betriebskennlinie ist im Grunde eine Aneinanderreihung vieler optimaler Betriebspunkte, die jeweils für eine vorherrschende Windbedingung, insbesondere vorherrschende Windgeschwindigkeit optimal sind. Entsprechend ist gemäß der vorliegenden Anmeldung unter einem bzw. dem optimalen Betriebspunkt - das gilt sinngemäß auch für einen bzw. den nicht optimalen Betriebspunkt - der Betriebspunkt für die jeweils vorherrschende Windbedingung bzw. Windgeschwindigkeit zu verstehen. Der optimale Betriebspunkt ist also nicht ein einziger absoluter Betriebspunkt für die Windenergieanlage für jegliche Bedingungen, sondern nur einer von vielen für die jeweils aktuelle Windbedingung.

Eine solche Betriebskennlinie wird insbesondere für den Teillastbetrieb hinterlegt. Im Teillastbetrieb einer drehzahlvariablen Windenergieanlage, die hier vorliegt, wird üblicherweise der Rotorblattwinkel, sofern er einstellbar ist, unabhängig von den Windbedingungen, nämlich der Windgeschwindigkeit für diesen Teillastbetrieb konstant gehalten. Es erfolgt nur, wie oben beschrieben, die Einstellung des jeweils gültigen Betriebspunktes, nämlich der Leistung und Drehzahl. Um im Teillastbetrieb nun für einen Übergangszeitraum eine erhöhte Drehzahl einzustellen, wird vorgeschlagen, anstatt einer ersten, optimalen Betriebskennlinie, eine zweite, nicht optimale Betriebskennlinie zugrunde zu legen. Basierend auf dieser nicht optimalen Betriebskennlinie wird dann eine höhere Drehzahl eingestellt, vorzugsweise bei gleicher Leistung wie bei dem korrespondierenden optimalen Betriebspunkt. Diese zweite Betriebskennlinie ist somit eine Aneinanderreihung vieler nicht optimaler Betriebspunkte, die jeweils eine höhere Drehzahl als die korrespondierenden optimalen Betriebspunkte aufweisen. Die Umsetzung des Betreibens der Windenergieanlage mit einer erhöhten Drehzahl ist somit auf einfache Weise im Teillastbereich durchführbar, indem eine entsprechende zweite Betriebskennlinie hinterlegt wird.

Weiterhin wird gemäß einer weiteren Ausgestaltung vorgeschlagen, dass bei abfallender Windgeschwindigkeit im Übergang vom Volllastbetrieb zum Teillastbetrieb zunächst, insbesondere für einen vorbestimmten Windgeschwindigkeitsbereich, die Leistung reduziert wird, während die Drehzahl konstant gehalten wird. Der Volllastbetrieb ist derjenige, bei dem die Windgeschwindigkeit den Wert der Nennwindgeschwindigkeit erreicht hat und die Windenergieanlage im Optimalfall mit Nennleistung und Nenndrehzahl betrieben wird. Bei weiter steigender Drehzahl erfolgt eine Veränderung des Rotorblattwinkels, ein so genanntes Pitchen, um die Aerodynamik des Rotors zu verschlechtern, um dem Wind weniger Energie zu entnehmen, um dadurch dem weiteren Ansteigen der Drehzahl entgegen zu wirken. Fällt die Windgeschwindigkeit nun wieder ab, so dass die Windenergieanlage vom Volllastbetrieb wieder in den Teillastbetrieb übergeht, wird hier vorgeschlagen, zunächst nur die Leistung, jedoch noch nicht oder in geringerem Umfang als üblich, die Drehzahl zu reduzieren. Die Drehzahl zunächst nicht zu reduzieren bedeutet insoweit, dass diese erst reduziert wird, wenn die Windgeschwindigkeit um einen vorbestimmten Wert unter Nennwindgeschwindigkeit abfällt. Die Drehzahl zunächst nicht zu reduzieren, ist insoweit nicht in zeitlicher Hinsicht zu verstehen.

Gemäß der Erfindung wird zudem vorgeschlagen, im Volllastbetrieb die Drehzahl für einen Übergangszeitraum die Windenergieanlage mit einer Drehzahl zu betreiben, die höher liegt als die Nenndrehzahl. Ein solcher Betrieb mit überhöhter Drehzahl kann die Lebenszeit der Windenergieanlage beeinträchtigen und sollte daher möglichst kurz gehalten werden. Der Übergangszeitraum sollte also möglichst kurz gehalten werden, wie beispielsweise nur 10 Minuten oder nur 1 Minute.

Günstig ist es, wenn die Windenergieanlage ein Rotorblatt oder mehrere Rotorblätter mit einstellbarem Rotorblattwinkel aufweist und jeweils die Rotorblattwinkel des nicht optimalen Betriebspunktes gegenüber dem Rotorblattwinkel des optimalen Betriebspunktes verändert sind. Die Verwendung einer Windenergieanlage mit einem oder mehreren Rotorblättern mit verstellbarem Rotorblattwinkel beschreibt insoweit auch einen Anlagentyp. Unter der Verstellung der Rotorblattwinkel ist eine aktive, deterministische Einstellung des Rotorblattwinkels zu verstehen. Mit anderen Worten betrifft dies eine Einstellung des Rotorblattwinkels mittels eines Motors oder anderem Aktuator. Vorzugsweise weist die Windenergieanlage eine horizontale bzw. im Wesentlichen horizontale Rotorachse auf. Auch unter dieser horizontalen Rotorachse ist ein Anlagentyp, nämlich eine so genannte Horizontalachsen-Windenergieanlage zu verstehen. Ein leichter Kippwinkel der Rotorachse gegenüber der Horizontalen um wenige Grad wie beispielsweise etwa 5° oder 10° fällt auch hierunter.

Die Einstellung einer höheren Drehzahl gegenüber der optimalen Drehzahl wird somit durch oder mithilfe einer entsprechenden Rotorblattwinkeleinstellung vorgenommen. So kann die nicht optimale Betriebskennlinie im Teillastbetrieb einen anderen Rotorblattwinkel zugrunde legen, als dies für die optimale Betriebskennlinie der Fall ist. Auch kann abweichend zu einer bekannten und auch hinterlegten optimalen Betriebskennlinie im Teillastbetrieb für die nicht optimale Betriebskennlinie eine Regelung gewählt werden, bei der der Rotorblattwinkel nicht als konstant vorausgesetzt wird.

Vorzugsweise wird von einem Betrieb im optimalen Betriebspunkt auf einen Betrieb im nicht optimalen Betriebspunkt gewechselt. Dies wird insbesondere für den Fall vorgeschlagen, wenn erwartet wird, dass eine erhöhte kinetische Energie gebraucht werden könnte. Der Wechsel kann vorzugsweise durch Empfang eines Ankündigungssignals oder Wechselsignals ausgelöst werden. Ein solches Ankündigungs- oder Wechselsignal kann von einem externen Netzbetreiber übertragen werden. Der Netzbetreiber kann beispielsweise ein solches Signal übertragen, wenn er einen Bedarf zur Stützung des elektrischen Netzes kommen sieht. So sind beispielsweise besondere Situationen bekannt, die zu einem kritischen Netzzustand führen können, oder die einen kritischen Netzzustand anzeigen können. Beispielsweise kann die Trennung einer Übertragungsleitung des elektrischen Netzes, die beispielsweise zu Reparaturzwecken oder aus anderen Gründen vorübergehend vorgenommen wird, das elektrische Netz in einen kritischen Zustand versetzen. Für diesen Fall kann der Netzbetreiber ein solches Ankündigungs- oder Wechselsignal an die Windenergieanlage oder einen Windpark mit mehreren Windenergieanlagen übermitteln.

Vorzugsweise wird vorgeschlagen, dass wenn die Windenergieanlage in dem nicht optimalen Betriebspunkt betrieben wird, der Windenergieanlage kinetische Energie entnommen wird, und diese Energie verwendet wird, um kurzzeitig mehr Wirkleistung in das elektrische Netz einzuspeisen, als die Windenergieanlage dem momentanen Wind aufgrund der vorherrschenden Windbedingung entnehmen kann. Somit wird die durch die erhöhte Drehzahl betriebene Windenergieanlage gespeicherte kinetische Energie genutzt, um das elektrische Netz zu stützen.

Vorzugsweise wird hierfür vorgeschlagen, dass diese Entnahme kinetischer Energie so erfolgt, dass sich die Drehzahl der Windenergieanlage durch das Entnehmen der kinetischen Energie zum Einspeisen der zusätzlichen Wirkleistung in das elektrische Netz von der nicht optimalen Drehzahl wenigstens bis zur optimalen Drehzahl reduziert. Vorzugsweise wird die Drehzahl noch weiter als die optimale Drehzahl reduziert. Somit kann zunächst mit der zusätzlichen gespeicherten kinetischen Energie die zusätzliche Wirkleistung in das Netz zum Stützen eingespeist werden und damit mehr als dem Wind derzeit entnehmbar ist

Vorzugsweise liegt die nicht optimale Drehzahl um etwa 0,5 bis 1,5 U/min höher als die optimale Drehzahl. Weiter bevorzugt liegt sie etwa um 1 U/min höher als die optimale Drehzahl. Somit kann eine signifikante Drehzahlerhöhung und damit einhergehend signifikante Erhöhung der kinetischen Energie vorgeschlagen werden, ohne die Windenergieanlage in einem zu ungünstigen Betriebspunkt zu betreiben, insbesondere ohne einen zu hohen Verschleiß zu erreichen und ohne ein zu hohes Risiko hinsichtlich der Stabilität der Windenergieanlage einzugehen.

Die beschriebene Erfindung betrifft somit ein Verfahren zum Steuern einer Windenergieanlage. Dabei ist unter einem solchen Steuerungsverfahren eine Steuerung im Allgemeinen zu verstehen, die nämlich eine Rückführung aufweisen kann, um somit eine Regelung zu bilden, oder die ohne Rückführung auskommen kann. Mit anderen Worten ist eine Regelung eine Steuerung mit Rückführung und umfasst somit eine Steuerung. Der Begriff Steuerung wird als verallgemeinerter Begriff verwendet.

Erfindungsgemäß wird zudem eine Windenergieanlage mit einem elektrischen Generator und einem aerodynamischen Rotor mit einstellbarer Drehzahl vorgeschlagen, die mit einem erfindungsgemäßen Verfahren betrieben wird. Vorzugsweise wird hierbei eine getriebelose Windenergieanlage verwendet.

Gemäß einer Ausführungsform wird vorgeschlagen, dass die Windenergieanlage FACTS-fähig ist. Die Bezeichnung FACTS steht für "Flexible-AC-Transmission-System" und ist auch im deutschen Sprachgebrauch für den Fachmann gebräuchlich. Hierunter wird in der elektrischen Energietechnik ein Steuerungssystem verstanden, welches in Stromversorgungsnetzen zur gezielten Beeinflussung von Leistungsflüssen eingesetzt wird. Insbesondere ist ein solches System in der Lage, gezielt Wirkleistung und/oder Blindleistung einzuspeisen. Außerdem kann eine solche Einspeisung abhängig von Messungen im Netz erfolgen, um dadurch beispielsweise direkt auf Frequenzänderungen zu reagieren. Somit wird eine Windenergieanlage vorgeschlagen, die in vorteilhafter Weise zum Netzstützen eingesetzt werden kann. Durch die Möglichkeit, eine erhöhte Drehzahl für einen Übergangszeitraum vorzusehen, wird die Möglichkeit geschaffen, eine erhöhte Energie in Form kinetischer Energie zur Stützung des Netzes bereitzustellen. Hierdurch kann ein solches Netz stützendes System zusätzliche Wirkleistung zum Stützen bereitstellen und ins elektrische Netz bei Bedarf einspeisen.

Vorzugsweise weist die Windenergieanlage wenigstens einen Wechselrichter auf, der erzeugte, elektrische Energie des Generators gleichrichtet und zur Einspeisung ins elektrische Netz wieder wechselrichtet, um hierdurch die Anpassung an Frequenz, Spannung und Phase des elektrischen Netzes vorzunehmen. Eine Windenergieanlage mit einem oder mehreren solcher Wechselrichter, bei der - abgesehen von Verlusten - die gesamte erzeugte elektrische Energie durch den einen bzw. die mehreren Wechselrichter geführt wird, wird auch als so genanntes Vollumrichter-System bezeichnet.

Erfindungsgemäß wird zudem ein Windpark mit wenigstens zwei Windenergieanlagen mit einem erfindungsgemäßen Steuerverfahren vorgeschlagen. Ein Windpark ist insoweit eine Ansammlung mehrerer Windenergieanlagen, die gekoppelt sind, insbesondere einen gemeinsamen Einspeisepunkt oder mehrere gemeinsame Einspeisepunkte zum Einspeisen elektrischer Energie in das elektrische Netzwerk aufweisen. Die zum erfindungsgemäßen Verfahren und zur erfindungsgemäßen Windenergieanlage beschriebenen Vorteile können durch diesen Windpark gebündelt werden, um dadurch eine signifikant hohe Reserveleistung bereitstellen zu können.

Nachfolgend wird die Erfindung anhand von Ausführungsbeispielen unter Bezugnahme auf die begleitenden Figuren beispielhaft erläutert.

Fig. 1    zeigt eine Horizontalachsen-Windenergieanlage.

Fig. 2    zeigt ein Diagramm mit zwei Drehzahl-Leistungs-Kennlinien.

Fig. 3    zeigt drei windgeschwindigkeitsabhängige Diagramme.

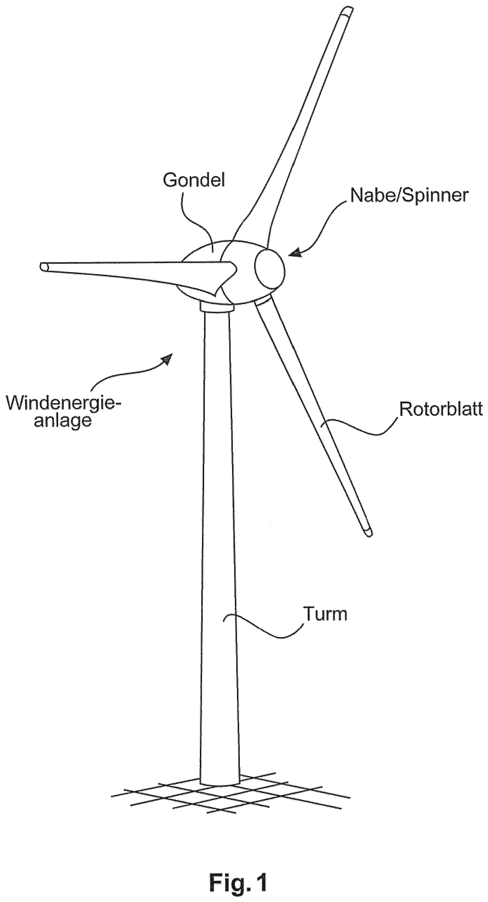

Fig. 1 zeigt eine Horizontalachsen-Windenergieanlage, wie sie grundsätzlich aus dem Stand der Technik bekannt ist. Erfindungsgemäß ist diese Horizontalachsen-Windenergieanlage der Fig. 1 mit einem Verfahren, nämlich einem Betriebsführungsverfahren gemäß der vorliegenden Erfindung ausgestattet.

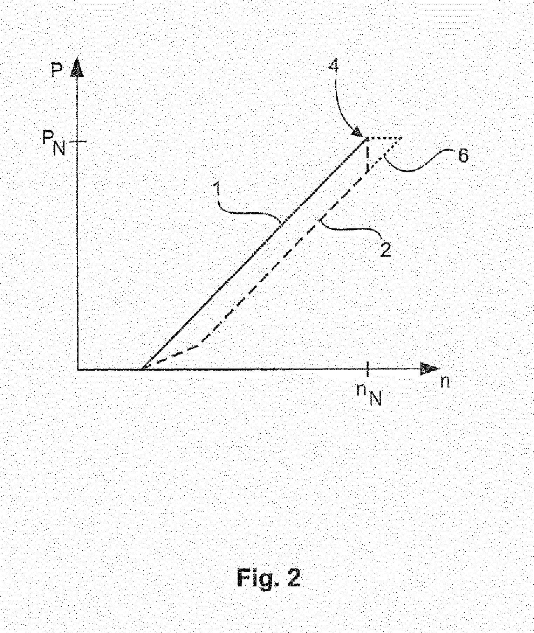

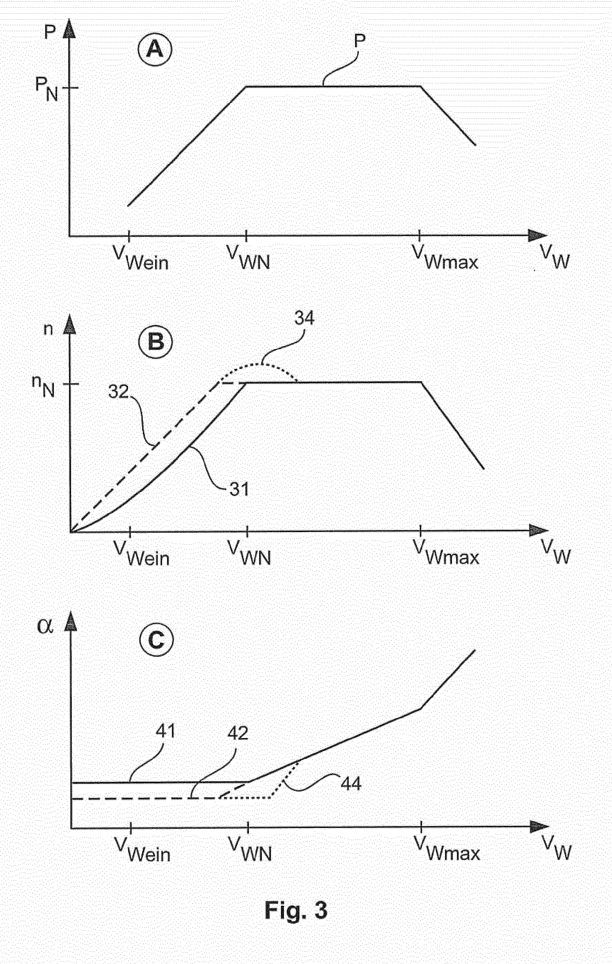

Fig. 2 zeigt zwei Betriebskennlinien, nämlich zwei Drehzahl-Leistungs-Kennlinien schematisch. In diesem Diagramm ist eine optimale Betriebskennlinie 1 mit einer durchgezogenen Linie eingezeichnet und eine nicht optimale Betriebskennlinie 2 mit einer gestrichelten Linie eingezeichnet. Beide Betriebskennlinien 1 und 2 stellen nur einen schematischen Verlauf dar, der vom realen Verlauf abweichen kann. Insbesondere kann der reale Verlauf von der vereinfachten geraden Darstellung abweichen. Diese Darstellung soll im Wesentlichen das Verhältnis zwischen optimaler Betriebskennlinie 1 und nicht optimaler Betriebskennlinie 2 veranschaulichen. Im Übrigen gilt dies auch für die Diagramme der Fig. 3, die ebenfalls gegenüber einem realen Verlauf stark vereinfacht sein können.

Aus dem Diagramm der Fig. 2 ist nun zu erkennen, dass die nicht optimale Betriebskennlinie 2 im Vergleich zur optimalen Betriebskennlinie 1 bei gleicher Leistung P jeweils eine größere Drehzahl n aufweist. Eine Erhöhung der Drehzahl gegenüber der jeweils optimalen Drehzahl kann somit durch Verwendung der nicht optimalen Betriebskennlinie 2 anstelle der optimalen Betriebskennlinie 1 erreicht werden.

Beide Betriebskennlinien 1 und 2 treffen sich im Nennpunkt 4, in dem die Windenergieanlage mit Nenndrehzahl $n_N$ und Nennleistung $P_N$ betrieben wird. Dieser Nennpunkt oder Nennbetriebspunkt 4 kann ab Erreichen einer Nennwindgeschwindigkeit betrieben werden. Weder die Leistung P noch die Drehzahl N sollte hierüber hinaus erhöht werden, um eine Überlastung der Anlage zu vermeiden. Gleichwohl kann es zumindest für einen kurzen Zeitraum verhältnismäßig sein, die Drehzahl n dennoch zu erhöhen. Dies ist durch einen alternativen Kennlinienabschnitt 6 veranschaulicht, der als gepunktete Linie eingetragen ist.

Fig. 3 zeigt drei Diagramme zum Erläutern einer Betriebsführung einer Windenergieanlage. Alle drei Diagramme stellen jeweils eine Betriebsgröße in Abhängigkeit der Windgeschwindigkeit $V_W$ dar, nämlich die abgegebene Leistung P in Diagramm A, die Drehzahl n der Windenergieanlage, nämlich des aerodynamischen Rotors in Diagramm B und der Rotorblattwinkel $\alpha$ in Diagramm C. Allen Diagrammen liegt dieselbe Abszisse, auf der die Windgeschwindigkeit aufgetragen ist, zugrunde.

Das Diagramm A zeigt einen charakteristischen Verlauf der Leistung P in Abhängigkeit der Windgeschwindigkeit $V_W$. Bei der Einschaltwindgeschwindigkeit $V_{Wein}$ beginnt die Leistungsproduktion. Die Leistung P steigt bis zur Nennleistung $P_N$ bei Nennwindgeschwindigkeit $V_{WN}$ an. Dieser Bereich wird auch als Teillastbereich bezeichnet. Von der Nennwindgeschwindigkeit $V_{WN}$ bis zur maximalen Windgeschwindigkeit $V_{Wmax}$ bleibt die abgegebene Leistung P konstant und die Windenergieanlage gibt Nennleistung $P_N$ ab. Ab der maximalen Windgeschwindigkeit $V_{Wmax}$ wird die Leistung P zum Schutz der Anlage bei weiter zunehmender Windgeschwindigkeit $V_W$ reduziert. Bei der erfindungsgemäßen Erhöhung der Drehzahl bleibt die Leistung zumindest gemäß einer Ausführung idealerweise unverändert und insoweit zeigt das Diagramm A nur eine Kennlinie für die Leistung P, die für die Verwendung optimaler Betriebspunkte als auch nicht optimaler Betriebspunkte gilt. Gemäß einer Ausführung kann sich die Leistung des jeweils optimalen Betriebspunktes aber von der Leistung des entsprechenden nicht optimalen Betriebspunktes unterscheiden, insbesondere etwas größer sein.

Diagramm B zeigt schematisch den Verlauf der Drehzahl n als optimale Drehzahlkennlinie 31, die mit einer durchgezogenen Linie dargestellt ist, und den Verlauf einer nicht optimalen Drehzahlkennlinie 32, die als gestrichelte Linie dargestellt ist. Beide Drehzahlkennlinien 31 und 32 korrespondieren mit der Leistungskennlinie P des Diagramms A, wobei auch in diesem Zusammenhang wiederholt wird, dass die Darstellungen schematisch und idealisiert sind, um den Erfindungsgedanken besser zu erläutern.

Gemäß Diagramm B der Fig. 3 liegt die Drehzahl gemäß der nicht optimalen Drehzahlkennlinie 32 somit bis zum Erreichen der Nennwindgeschwindigkeit $V_{WN}$ - also im Teillastbereich - über der Drehzahl gemäß der optimalen Drehzahlkennlinie 31. Beim Erreichen der Nennwindgeschwindigkeit $V_{WN}$ erreicht die Anlage ihren Betriebspunkt und damit die Drehzahl n die Nenndrehzahl $n_N$ sowohl gemäß der optimalen Drehzahlkennlinie 31 als auch der nicht optimalen Drehzahlkennlinie 32, die gestrichelt dargestellt ist.

Gemäß der Erfindung ist vorgesehen, die Drehzahl n über die Nenndrehzahl $n_N$ noch zu erhöhen, was durch den alternativen Kennlinienzweig 34, der gepunktet dargestellt ist, angedeutet ist. Hierbei wird zumindest für einen bestimmten Zeitraum eine Überlastung der Windenergieanlage durch eine entsprechend hohe Drehzahl in Kauf genommen.

Ansonsten stimmen die Drehzahlen n des optimalen und nicht optimalen Betriebs im Volllastbereich bzw. Volllastbetrieb, also ab der Windgeschwindigkeit $V_{WN}$ bis zur maximalen Windgeschwindigkeit $V_{Wmax}$ überein, weisen nämlich Nenndrehzahl $n_N$ auf. Sie sind auch für den so genannten Sturmbereich, nämlich für Windgeschwindigkeiten größer als die maximale Windgeschwindigkeit $V_{Wmax}$, gleich.

Dem grundsätzlich gezeigten Leistungsverlauf gemäß Diagramm A und Drehzahlverlauf gemäß Diagramm B kann ein Verlauf des Rotorblattwinkels $\alpha$ gemäß Diagramm C zugrunde liegen. Auch das Diagramm C zeigt die dargestellten Verläufe schematisch. Eine optimale Rotorblattwinkelkennlinie 41 ist mit einer durchgezogenen Linie im Diagramm C eingezeichnet. Diese verläuft im Teillastbereich bzw. Teillastbetrieb, also bis zur Nennwindgeschwindigkeit $V_{WN}$ waagerecht, der Rotorblattwinkel bleibt hier also unverändert. Im Volllastbereich bzw. Volllastbetrieb, also ab Nennwindgeschwindigkeit $V_{WN}$ wird der Rotorblattwinkel vergrößert, um die Rotorblätter zum Schutz aus dem Wind zu drehen. Ab Erreichen der maximalen Windgeschwindigkeit $V_{Wmax}$ erfolgt eine weitere insbesondere stärkere Verstellung des Rotorblattwinkels, um die Anlage weiter zu schützen. Anstelle eines Anstiegs des Rotorblattwinkels sind auch Darstellungen eines Abfalls des Rotorblattwinkels für den Volllastbetrieb bekannt, was jedoch keinen anderen Effekt beschreibt, sondern lediglich eine andere Nomenklatur zugrunde legt. Die Verstellung des Rotorblattwinkels im Volllastbetrieb, was allgemein als Pitchen bezeichnet wird, ist dem Fachmann grundsätzlich bekannt.

Die nicht optimale Rotorblattwinkelkennlinie 42 ist gestrichelt dargestellt und zeigt im Teillastbereich einen etwas kleineren Rotorblattwinkel als in demselben Bereich die optimale Rotorblattwinkelkennlinie 41 zeigt. Dieser kleinere Rotorblattwinkel kann zunächst als "ungünstiger" angesehen werden. Eine höhere Drehzahl kann dann aufgrund eines kleineren Drehmomentes, nämlich Gegenmomentes erreicht werden. Durch ein kleineres Generatormoment, das entsprechend auch ein Gegenmoment darstellt, kann sich eine höhere Drehzahl ergeben - wie in Diagramm B gezeigt ist - was wiederum zu einem veränderten Anströmwinkel führen kann. Der Anströmwinkel hängt nämlich nicht nur von der Windgeschwindigkeit $V_W$ ab, sondern auch von der Geschwindigkeit des Rotors und setzt sich aus diesen beiden Geschwindigkeiten vektoriell zusammen. Im Übrigen wird auf den allgemein bekannten Zusammenhang zwischen Leistung P, Drehzahl n und Drehmoment N gemäß folgender Formel hingewiesen:

$$P = 2 \pi nM.$$

Beim Erreichen der Nennwindgeschwindigkeit $V_{WN}$ gleicht sich der Rotorblattwinkel gemäß der nicht optimalen Rotorblattkennlinie 42 dem Rotorblattwinkel der optimalen Rotorblattwinkelkennlinie 41 an. Wenn im Bereich der Nennwindgeschwindigkeit $V_{WN}$ eine höhere Drehzahl als die Nenndrehzahl verwendet werden soll, so würde der Rotorblattwinkel bei Erreichen der Nennwindgeschwindigkeit $V_{WN}$ zunächst nicht erhöht werden - nicht gepitcht werden - was durch den alternativen Kennlinienzweig 44, der als gepunktete Linie dargestellt ist, verdeutlicht wird. Wie oben beschrieben wird in diesem Fall eine Überlastung der Anlage jedenfalls für einen bestimmten Zeitraum in Kauf genommen.

Erfindungsgemäß wird somit für einen Übergangszeitraum vorgeschlagen, die Windenergieanlage mit einer zumindest leicht erhöhten Drehzahl zu betreiben, um eine bestimmte Energiereserve als kinetische Energie verfügbar zu haben.

## Patentansprüche

1. Verfahren zum Steuern einer an ein elektrisches Netz angeschlossenen Windenergieanlage mit einem Generator mit einem aerodynamischem Rotor mit einstellbarer Drehzahl, bei dem die Windenergieanlage in einem, bezogen auf vorherrschende Windbedingungen optimalen Betriebspunkt mit einer optimalen Drehzahl betreibbar ist, wobei die Windenergieanlage für einen Übergangszeitraum oder dauerhaft in einem nicht optimalen Betriebspunkt mit einer nicht optimalen Drehzahl betrieben wird, und die nichtoptimale Drehzahl größer ist als die optimale Drehzahl
**dadurch gekennzeichnet, dass**
im Volllastbetrieb die Drehzahl für einen Übergangszeitraum der Windenergieanlage mit einer Drehzahl betrieben wird, die höher liegt als die Nenndrehzahl.

2. Verfahren nach Anspruch 1, **dadurch gekennzeichnet, dass** im Teillastbetrieb zum Einstellen eines jeweils optimalen Betriebspunkts eine erste Betriebskennlinie hinterlegt ist und zum Steuern der Windenergieanlage mit der nicht optimalen Drehzahl eine zweite Betriebskennlinie verwendet wird und die nicht optimale Drehzahl anhand der zweiten Betriebskennlinie eingestellt wird.

3. Verfahren nach Anspruch 1 oder 2, **dadurch gekennzeichnet, dass** bei abfallender Windgeschwindigkeit im Übergang vom Vollastbetrieb zum Teillastbetrieb zunächst, insbesondere für einen vorbestimmten Windgeschwindigkeitsbereich, die Leistung reduziert wird, während die Drehzahl konstant gehalten wird.

4. Verfahren nach einem der vorstehenden Ansprüche, **dadurch gekennzeichnet, dass** die Windenergieanlage ein Rotorblatt oder mehrere Rotorblätter mit einstellbarem Rotorblattwinkel aufweist und jeweils der Rotorblattwinkel des nicht optimalen Betriebspunktes gegenüber dem Rotorblattwinkel des optimalen Betriebspunktes verändert ist.

5. Verfahren nach einem der vorstehenden Ansprüche, **dadurch gekennzeichnet, dass** vom Betrieb im optimalen Betriebspunkt auf Betrieb im nicht optimalen Betriebspunkt gewechselt wird, insbesondere ausgelöst durch Empfang eines Ankündigungssignals, insbesondere eines externen von einem Netzbetreiber übertragenen Ankündigungssignals.

6. Verfahren nach einem der vorstehenden Ansprüche, **dadurch gekennzeichnet, dass** wenn die Windenergieanlage in dem nicht optimalen Betriebspunkt betrieben wird, der Windenergieanlage kinetische Energie entnommen wird, und diese kinetische Energie verwendet wird, um kurzzeitig mehr Wirkleistung in das elektrische Netz einzuspeisen, als die Windenergieanlage dem momentanen Wind aufgrund der vorherrschenden Windbedingungen entnehmen kann.

7. Verfahren nach Anspruch 6, **dadurch gekennzeichnet, dass** sich die Drehzahl der Windenergieanlage durch das Entnehmen der kinetischen Energie zum Einspeisen der mehr Wirkleistung in das elektrische Netz, von der nicht optimalen Drehzahl wenigstens bis zur optimalen Drehzahl reduziert.

8. Verfahren nach einem der vorstehenden Ansprüche, **dadurch gekennzeichnet, dass** die nicht optimale Drehzahl etwa 0,5 bis 1,5 Umdrehungen pro Minute, insbesondere etwa eine Umdrehung pro Minute höher liegt, als die optimale Drehzahl.

9. Windenergieanlage mit einem elektrischen Generator mit einem aerodynamischen Rotor mit einstellbarer Drehzahl, **dadurch gekennzeichnet, dass** die Windenergieanlage mit einem Verfahren gemäß einem der vorstehenden Ansprüche betrieben wird.

10. Windenergieanlage nach Anspruch 9, **dadurch gekennzeichnet, dass** zwischen dem aerodynamischen Rotor und dem elektrischen Generator kein Getriebe vorgesehen ist.

11. Windenergieanlage nach Anspruch 9 oder 10, **dadurch gekennzeichnet, dass** die Windenergieanlage FACTS-fähig ist, und/oder einen oder mehrere Wechselrichter aufweist, um erzeugte, elektrische Energie des Generators gleichzurichten und zur Einspeisung ins elektrische Netz in Anpassung an Frequenz, Spannung und Phase im elektrischen Netz wechselzurichten.

**12.** Windpark, umfassend wenigstens zwei Windenergieanlagen nach einem der Ansprüche 9 bis 11, und wenigstens einen gemeinsamen Einspeisepunkt zum Einspeisen elektrischer Leistung wenigstens zweier bzw. der zwei Windenergieanalgen.

**Claims**

**1.** A method of controlling a wind power installation connected to an electric network having a generator with an aerodynamic rotor with an adjustable rotary speed, in which the wind power installation can be operated at an operating point which is optimum in relation to prevailing wind conditions at an optimum rotary speed, wherein the wind power installation is operated for a transitional period of time or lastingly at a non-optimum operating point at a non-optimum rotary speed and the non-optimum rotary speed is higher than the optimum rotary speed,
**characterized in that**
in the full-load mode of operation for a transitional period of time the wind power installation is operated at a rotary speed higher than the nominal rotary speed

**2.** A method according to claim 1 **characterised in that** in the part-load mode of operation a first operating characteristic is stored for setting a respectively optimum operating speed and a second operating characteristic is used for controlling the wind power installation at the non-optimum rotary speed and the non-optimum rotary speed is set on the basis of the second operating characteristic.

**3.** A method according to claim 1 or claim 2 **characterised in that** with a falling wind speed in the transition from the full-load mode of operation to the part-load mode of operation the power is firstly reduced, in particular for a predetermined wind speed range, while the rotary speed is kept constant.

**4.** A method according to one of the preceding claims **characterised in that** the wind power installation has a rotor blade or a plurality of rotor blades having an adjustable rotor blade angle and the rotor blade angle of the non-optimum operating point is respectively altered relative to the rotor blade angle of the optimum operating point.

**5.** A method according to one of the preceding claims **characterised in that** the change is made from operation at the optimum operating point to operation at the non-optimum operating point, in particular triggered by reception of a notification signal, in particular an external notification signal transmitted by a network operator.

**6.** A method according to one of the preceding claims **characterised in that** when the wind power installation is operated at the non-optimum operating point kinetic energy is taken from the wind power installation and said kinetic energy is used to temporarily feed more active power into the electric network than the wind power installation can take from the currently prevailing wind on the basis of the prevailing wind conditions.

**7.** A method according to claim 6 **characterised in that** the rotary speed of the wind power installation is reduced from the non-optimum rotary speed at least to the optimum rotary speed by the kinetic energy being taken for feeding the increased active power into the electric network.

**8.** A method according to one of the preceding claims **characterised in that** the non-optimum rotary speed is at about 0.5 to 1.5 revolutions per minute, in particular about one revolution per minute, higher than the optimum rotary speed.

**9.** A wind power installation having an electric generator with an aerodynamic rotor with an adjustable rotary speed, **characterised in that** the wind power installation is operated with a method according to one of the preceding claims.

**10.** A wind power installation according to claim 9 **characterised in that** no gear assembly is provided between the aerodynamic rotor and the electric generator.

**11.** A wind power installation according to claim 9 or claim 10 **characterised in that** the wind power installation is FACTS-capable and/or has one or more converters for rectifying produced electric energy of the generator and converting it to AC again for feed into the electric network in adapted relationship to frequency, voltage and phase in the electric network.

**12.** A wind park including at least two wind power installations according to one of claims 9 to 11 and at least one common feed-in point for feeding in electric power of at least two or the two wind power installations.

**Revendications**

**1.** Procédé pour commander une éolienne raccordée à un réseau électrique avec un générateur avec un rotor aérodynamique avec une vitesse de rotation réglable, où l'éolienne peut fonctionner à une vitesse de rotation optimale à un point de fonctionnement optimal par rapport aux conditions de vent prédominantes, dans lequel l'éolienne fonctionne pendant une période de transition ou en permanence à une vitesse de rotation non optimale à un point de fonctionnement non optimal, et la vitesse de rotation non optimale est supérieure à la vitesse de rotation optimale,

**caractérisé en ce que**

dans le mode de fonctionnement en pleine charge, la vitesse de rotation de l'éolienne est pendant une période de transition plus élevée que la vitesse de rotation nominale.

2. Procédé selon la revendication 1, **caractérisé en ce que** dans le mode de fonctionnement en charge partielle, une première caractéristique de fonctionnement est enregistrée pour régler un point de fonctionnement respectivement optimal et une deuxième caractéristique de fonctionnement est utilisée pour commander l'éolienne avec la vitesse de rotation non optimale, et la vitesse de rotation non optimale est réglée à l'aide de la deuxième caractéristique de fonctionnement.

3. Procédé selon la revendication 1 ou 2, **caractérisé en ce que** en cas de chute de la vitesse du vent, lors de la transition du mode de fonctionnement en pleine charge au mode de fonctionnement en charge partielle, en particulier pour une plage de vitesses du vent prédéfinie, la puissance est réduite tandis que la vitesse de rotation est maintenue constante.

4. Procédé selon l'une quelconque des revendications précédentes, **caractérisé en ce que** l'éolienne présente une pale de rotor ou plusieurs pales de rotor avec un angle de pale de rotor réglable, et respectivement l'angle de pale de rotor du point de fonctionnement non optimal est modifié par rapport à l'angle de pale de rotor du point de fonctionnement optimal.

5. Procédé selon l'une quelconque des revendications précédentes, **caractérisé en ce qu'**un passage du fonctionnement au point de fonctionnement optimal au fonctionnement au point de fonctionnement non optimal est effectué, en particulier par un déclenchement lié à la réception d'un signal d'avertissement, en particulier d'un signal d'avertissement transmis de manière externe par un opérateur de réseau.

6. Procédé selon l'une quelconque des revendications précédentes, **caractérisé en ce que**, lorsque l'éolienne fonctionne au point de fonctionnement non optimal, de l'énergie cinétique est prélevée de l'éolienne, et cette énergie cinétique est utilisée pour injecter pendant un court instant une quantité de puissance active plus grande dans le réseau électrique que l'éolienne ne peut prélever du vent du moment en raison des conditions de vent prédominantes.

7. Procédé selon la revendication 6, **caractérisé en ce que** la vitesse de rotation de l'éolienne est réduite de la puissance de rotation non optimale au moins jusqu'à la vitesse de rotation optimale du fait du prélèvement de l'énergie cinétique pour injecter la quantité plus importante de puissance active dans le réseau électrique.

8. Procédé selon l'une quelconque des revendications précédentes, **caractérisé en ce que** la vitesse de rotation non optimale est plus élevée d'environ 0,5 à 1,5 tour par minute, en particulier d'environ un tour par minute que la vitesse de rotation optimale.

9. Eolienne avec un générateur électrique avec un rotor aérodynamique avec une vitesse de rotation réglable, **caractérisée en ce que** l'éolienne fonctionne avec un procédé selon l'une quelconque des revendications précédentes.

10. Eolienne selon la revendication 9, **caractérisée en ce qu'**aucune transmission n'est prévue entre le rotor aérodynamique et le générateur électrique.

11. Eolienne selon la revendication 9 ou 10, **caractérisée en ce que** l'éolienne est compatible avec un FACTS et/ou présente un ou plusieurs onduleurs pour redresser une énergie électrique générée du générateur et pour l'onduler en fonction de la fréquence, de la tension et de la phase dans le réseau électrique pour l'injection dans le réseau électrique.

12. Parc éolien comprenant au moins deux éoliennes selon l'une quelconque des revendications 9 à 11, et au moins un point d'injection commun pour injecter une puissance électrique d'au moins deux ou des deux éoliennes.

Gondel

Nabe/Spinner

Windenergieanlage

Rotorblatt

Turm

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10022974 A1
- DE 102009014012 A1
- DE 10341504 A1
- WO 2011000531 A2
- WO 2005025026 A1
- US 20030185665 A1